Europäisches Patentamt

(19) European Patent Office

Office européen des brevets

(11) Veröffentlichungsnummer: **0 013 661**

**A1**

(12) # EUROPÄISCHE PATENTANMELDUNG

(21) Anmeldenummer: 80810003.6

(22) Anmeldetag: 04.01.80

(51) Int. Cl.³: **G 01 N 31/00**

(30) Priorität: 10.01.79 CH 215/79

(43) Veröffentlichungstag der Anmeldung:
23.07.80 Patentblatt 80/15

(84) Benannte Vertragsstaaten:
CH DE FR GB

(71) Anmelder: CIBA-GEIGY AG
Patentabteilung Postfach
CH-4002 Basel(CH)

(72) Erfinder: Affolter, Jean, Dr.
chemin de la Mouline 6
CH-1022 Chavannes(CH)

(54) **Verfahren und Vorrichtung zur quantitativen Stickstoffbestimmung.**

(57) Die zu analysierende Probe wird mit einem aus Wasserstoff und Helium bestehenden Trägergasstrom durch einen Reduktionsofen (23) geschickt, worin die in der Probe enthaltenen Stickstoffverbindungen katalytisch zu Ammoniak reduziert werden. Aus dem Gasgemisch werden die sauren Bestandteile eliminiert. Der Ammoniak wird dann unter Zusatz von Sauerstoff in einem zweiten Ofen (24) katalytisch zu Stickoxiden oxidiert. Der Stickoxidgehalt des dabei anfallenden Gasgemisches wird in einem selektiven Analysator (21) bestimmt und in einem Integrator (22) daraus der Gesamtstickstoffgehalt ermittelt.

Fig.1

CIBA-GEIGY AG                           7-12181/+
Basel (Schweiz)


Verfahren und Vorrichtung zur quantitativen Stickstoffbestimmung

     Die Erfindung betrifft ein Verfahren zur Bestimmung
des Stickstoffgehalts von organischen und anorganischen, in
Wasser wenigstens homogen mischbaren oder löslichen Stoffen,
wobei eine Probe des Stoffes mit Wasserstoff unter Wärmeeinwirkung katalytisch zu Ammoniak reduziert wird.

     Zur quantitativen Stickstoffbestimmung existieren
eine Reihe von Methoden und Vorrichtungen. Zu den bekanntesten zählen das Kjeldahl-Verfahren und das Dumas-Verfahren.
Bei ersterem, welches hauptsächlich für Aminosäuren und biologische Stoffe geeignet ist, werden die stickstoffhaltigen
organischen Substanzen mineralisiert und der Stickstoff dabei zu Ammoniak umgesetzt. Durch Abdestillieren und Titrieren
wird dann der Ammoniakgehalt ermittelt und aus diesem auf
den Stickstoffgehalt geschlossen. Beim Dumas-Verfahren,
welches hauptsächlich für feste Substanzen bestimmt ist,
werden die Stickstoffverbindungen zu Elementar-Stickstoff
oxidiert und dieser dann quantitativ gemessen.

- 2 -

Beide bekannten Verfahren sind mit verschiedenen Nachteilen behaftet. So ist z.B. das Kjeldahl-Verfahren nicht für anorganische Substanzen geeignet und kann auch gewisse organische Stoffe mit in Ringsystemen gebundenem Stickstoff nicht erfassen. Das Dumas-Verfahren wiederum ist nur für feste Proben geeignet. Beide Verfahren benötigen relativ grosse Probenvolumina, die insbesondere beim Dumas-Verfahren zu einer raschen Desaktivierung der Katalysatoren führen. Ausserdem ist das Kjeldahl-Verfahren recht langsam (Grössenordnung 2 Stunden pro Analyse) und zudem noch recht aufwendig.

Gemäss einem weiteren bekannten Verfahren werden die zu analysierenden Substanzen (siehe z.B. Dohrmann Total Nitrogen Analyzer Typ DN-10 der Fa. Dohrmann, Santa Clara USA) zu Stickoxiden oxidiert und diese dann quantitativ erfasst. Bei diesem Verfahren entsteh aber neben einem breiten Spektrum an Stickoxiden auch Elementar-Stickstoff, der dann bei der Messung nicht erfasst wird. Die Oxidation ist temperaturabhängig und liefert nicht immer den gleichen Anteil an Stickoxiden, sodass das Messergebnis entsprechend unzuverlässig ist.

Aufgabe der Erfindung ist demnach eine einfachere und wirtschaftliche Methode zur Stickstofferfassung anzugeben, die mit geringeren Probenvolumina auskommt, und rasche und genaue Analyse ermöglicht.

Diese Aufgabe wird durch die im Patentanspruch 1 aufgeführten Massnahmen gelöst.

Die Erfindung betrifft auch eine Vorrichtung zur Durchführung des Verfahrens. Die erfindungsgemässe Vorrichtung ist durch die im Anspruch 9 angeführten Merkmale gekennzeichnet.

Im folgenden wird die Erfindung anhand der Zeichnung näher erläutert: Es zeigen:

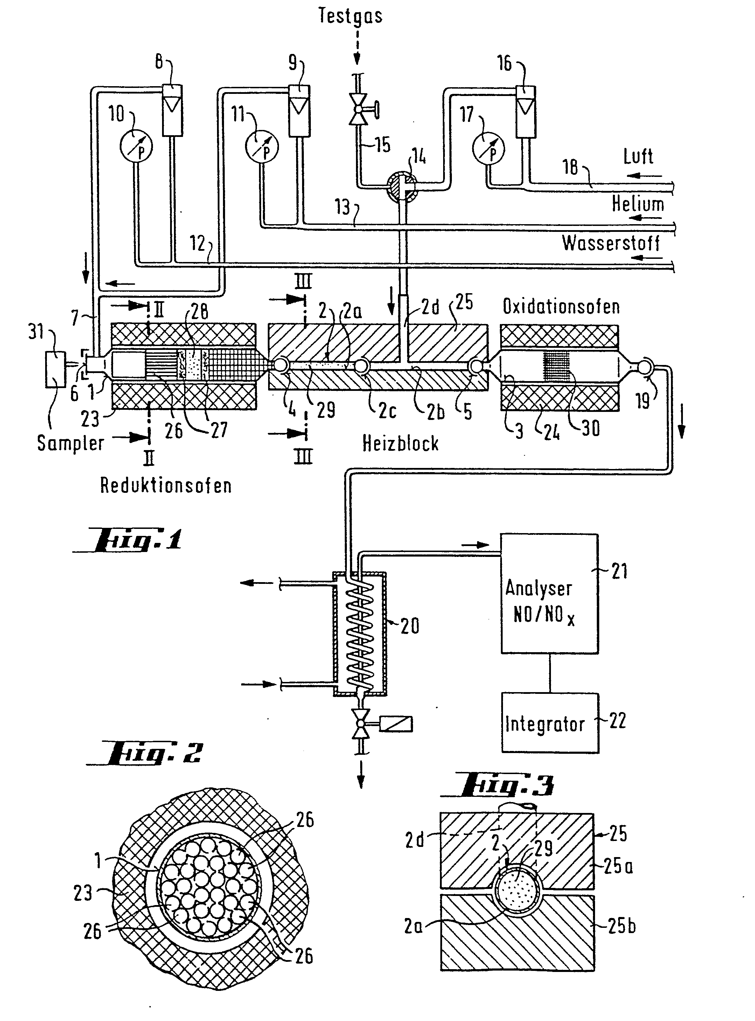

Fig. 1          ein Ausführungsbeispiel einer erfindungsgemässen Vorrichtung in schematischer Darstellung
                und

Fig. 2 und 3 je einen Schnitt nach den Linien II-II bzw.
                III-III der Fig. 1.

Die dargestellte Vorrichtung umfasst drei Rohrleitungsstücke 1-3 aus Quarzglas, die mittels konventioneller
Kupplungen 4 und 5 in Serie geschaltet sind. Das zweite
Leitungsstück 2 besteht aus zwei Sektionen 2a und 2b, die
durch eine Kupplung 2c verbunden sind. In die zweite Sektion 2b mündet ein Anschlussstück 2d. Das vordere Ende des
ersten Leitungsstücks 1 ist mit einem Septum 6 abgeschlossen und mit einer Zufuhrleitung 7 versehen, die ihrerseits
über je einen Durchflussregler 8 und 9 und zwei Manometer
10 und 11 an zwei Speiseleitungen 12 und 13 für Wasserstoff
und Helium angeschlossen ist. Das Anschlussstück 2d des
zweiten Rohrleitungsstücks 2 ist über ein Dreiweg-
Ventil 14 an eine Testgasspeiseleitung 15 und über einen
weiteren Durchflussregler 16 und ein Manometer 17 an eine
Druckluftpeiseleitung 18 angeschlossen.

Der Ausgang des dritten Rohrleitungsstückes 3 ist
mittels einer Kupplung 19 an einen Kondensator-Wasserabscheider  20 und dieser an einen Stickoxid—Analysator 21
angeschlossen. Letzterer steuert ein integrierendes Messgerät 22, das direkt in Stickstoffgehalt geeicht ist.

Das erste und das dritte Leitungsstück 1 bzw. 3
sind je in einem elektrischen Ofen 23 bzw. 24 angeordnet.
Die beheizte Leitungslänge beträgt beim ersten Leitungsstück

- 4 -

ca. 25 cm und beim zweiten Leitungsstück ca. 17,5 cm. Als
Ofen kommt zum Beispiel der Typ BR 1,8/16 der Firma HERAEUS,
Hanau, Bundesrepublik Deutschland in Frage.

Das zweite Leitungsstück ist ebenfalls beheizt.
Es ist dazu in einem elektrisch geheizten, aus zwei Teilen
25a und 25b (Fig. 3) bestehenden Aluminium-Block 25 eingebettet, der auch einen Teil des Anschlussstücks 2d mit
umschliesst und beheizt.

Im ersten Rohrleitungsstück 1 befindet sich ein
Reduktionskalalysator. Dieser besteht aus einer Packung
von kleinen, zum Leitungsstück parallelen Röllchen 26, die
aus feiner Nickelfolie aufgewickelt sind. Die Länge der
Röllchen beträgt etwa von 20 bis 40 mm. Die Stärke der
Nickelfolie ist ca. 0,2 bis 0,4 mm, der Röllchendurchmesser etwa 3 mm.
Diese Röllchenpackung verhindert, dass die eingespritzte
Probenflüssigkeit mit der Glaswand des Leitungsstückes 1
in Berührung kommt.

An die Röllchenpackung 26 anschliessend ist ein
Pfropfen 27 aus Quarzwolle und an diesen anschliessend
ein weiterer Katalysator 28 in Form einer Mischung aus
einem pulverförmigen Mineral (" Chromosorb-P" 30/60 Mesh,
der Fa. Johns - Manville- USA ) und einem Chrom-Kupfer-
Granulat (Ca-0401P der Firma Harshau, USA) angeordnet.

Im Abschnitt 2a des zweiten Rohrleitungsstücks
2 befindet sich mit Natronlauge belegtes Mineralpulver
"Chromosorb-P" 30/60 Mesh, der Fa. Johns - Manville -
USA 29. Dieses dient dazu, saure Bestandteile aus dem
dieses Leitungsstück durchströmenden Medienstrom
zurückzuhalten.

Im Rohrleitungsstück 3 schliesslich ist ein Oxidationskatalysator 30 in Form eines feinen Platin-Netzwerks angeordnet.

Die Funktion der vorstehend beschriebenen Vorrichtung ist wie folgt:
Zunächst werden die Oefen 23 und 24 und der Aluminium-Block
25 aktiviert. Die Temperatur des Ofens 23 kann von 400-
1200°C betragen, wird aber vorzugsweise auf etwa 900°C eingestellt. Die Temperatur des Ofens 24 kann ebenfalls 400-
1200°C betragen, und wird vorzugsweise ebenfalls auf rund
900°C eingestellt. Der Aluminiumblock 25 wird auf 100-300°C
erwärmt, vorzugsweise auf etwa 180°C.

Dann wird mittels der Durchflussregler 8 und 9 ein
Gesamtträgergasstrom (Wasserstoff plus Helium) von 100 bis
300 ml, vorzugsweise etwa 200 ml pro Minute eingestellt.
Das Volumsverhältnis Wasserstoff-Helium wird dabei auf
etwa 1:10 bis 1:5 eingestellt.

Mittels des Durchflussreglers 16 wird dann die Menge
der dem zweiten Leitungsstück 2 aus einer Flasche oder über
eine Pumpe zugeführten Druckluft eingestellt, und zwar auf
etwa 100-400 ml/min, vorzugsweise etwa 200 ml.
Nun wird eine Probe des zu untersuchenden Stoffes, beispielsweise Abwasser oder ein in Wasser gelöster oder homogen gemischter organischer Stoff, entweder von Hand oder
mittels eines Einspritzautomaten 31, wie er z.B. von Gaschromatographen her gut bekannt ist, durch das Septum 6 in
das erste Rohrleitungsstück 1 eingespritzt. Das Probenvolumen beträgt dabei etwa 10-20 μl.

Im ersten Ofen 23 bzw. Rohrstück 1 werden nun alle
stickstoffhaltigen Substanzen zu Ammoniak reduziert. Das
das Rohrstück 1 verlassende Gasgemisch wird nun im Rohrstück 2a von sauren Bestandteilen befreit und im Rohrstück
2b mit Sauerstoff (und Stickstoff etc.) im Ueberfluss versetzt. Im Rohrstück 3 wird dann der Ammoniak mit dem (Luft-)
Sauerstoff oxidiert, wobei Stickoxide $NO$, $NO_2$ und andere
sowie Wasserdampf entstehen. Der Wasserdampf wird im Kondensator 20 kondensiert und abgeschieden. Das dermassen entfeuchtete Gasgemisch gelangt dann in den Stickoxid-Analysator 21, welcher allenfalls vorhandene höhere Stickoxide
zu Stickstoffmonoxid reduziert und ein der Monoxidkonzentration entsprechendes Ausgangssignal liefert, welches
dann vom Messgerät 22 integriert wird. Als Analysator 21
kann z.B. der Typ 952 der Firma Beckman, Fullerton, USA
eingesetzt werden. Als integrierendes Messgerät ist z.B.
der "Minigrator " der Firma Spektra-Physics, Santa Clara,
USA geeignet.

Zum Eichen der gesamten Vorrichtung wird eine Testlösung mit bekanntem Stickstoffgehalt eingespritzt. Zur
Prüfung der Güte der Platin-Katalysators 30 kann über das
Ventil 14 ein Testgas mit bekannter Ammoniak-Konzentration
zugeführt werden.

Ein wesentlicher Vorteil des erfindungsgemässen
Verfahrens und der Vorrichtung besteht in der hohen Empfindlichkeit und damit in der geringen Probenmenge, die zur
Analyse nötig ist. Dadurch wird die Lebensdauer der Katalysatoren im Vergleich zu anderen Verfahren wesentlich
(100 x) erhöht und ausserdem auch die Analysengenauigkeit
erheblich besser. Ferner erlaubt die Erfindung sehr rasche
Analysen (z.B. periodisch alle 3 Minuten) und kann auch
schwierige Stickstoffverbindungen erfassen.

Der normale Messbereich der vorstehend beschriebenen Vorrichtung erstreckt sich von 5 bis 500 mgN/l. Die Nachweisgrenze liegt bei 0,1 mgN/l. Die relative Standardabweichung liegt bei 1 %.

Die erfindungsgemässe Vorrichtung ist in Bezug auf das erforderliche Probenvolumen, den Zeitaufwand, die Vollständigkeit der Stickstofferfassung, Empfindlichkeit und Wirtschaftlichkeit allen bekannten Vorrichtungen überlegen.

- 8 -

## Patentansprüche

1. Verfahren zur Bestimmung des Stickstoffgehalts von
organischen und anorganischen, in Wasser wenigstens homogen mischbaren oder löslichen Stoffen, wobei eine Probe
des Stoffes mit Wasserstoff unter Wärmeeinwirkung katalytisch zu Ammoniak reduziert wird, dadurch gekennzeichnet,
dass der Ammoniak mit Sauerstoff unter Wärmeeinwirkung katalytisch zu Stickoxiden ($NO_x$) oxidiert und der Stickstoffgehalt der Probe anhand dieser Stickoxide bestimmt wird.

2. Verfahren nach Anspruch 1, dadurch gekennzeichnet,
dass die Reduktion und/oder die Oxidation bei Temperaturen
von 300°-1200°C, vorzugsweise von 800°-1000°C, insbesondere von etwa 900°C durchgeführt wird.

3. Verfahren nach Anspruch 1, dadurch gekennzeichnet,
dass zwei Reduktionskatalysatoren verwendet werden, wobei
der erste in Form einer Packung vorliegt, die aus aus dünnen
Nickelfolien aufgewickelten, achsparallelen Röllchen
besteht, und der zweite ein Metall- oder Metalloxidpulver
oder- granulat ist.

4. Verfahren nach einem der vorangehenden Ansprüche,
dadurch gekennzeichnet, dass das bei der Reduktion anfallende Stoffgemisch bei Temperaturen von etwa 160-200°C, insbesondere um 180°C, zumindest teilweise von sauren Bestandteilen befreit wird.

5. Verfahren nach einem vorangehenden Ansprüche,
dadurch gekennzeichnet, dass die Probe in einen aus
Inertgas, insbesondere Helium, und Wasserstoff bestehenden
Trägergasstrom eingespritzt wird.

6.     Verfahren nach Anspruch 5, dadurch gekennzeichnet, dass das Volums-Verhältnis von Wasserstoff zu Inertgas im Trägergasstrom etwa 1:10 bis 1:5 beträgt.

7.     Verfahren nach Anspruch 5 oder 6, dadurch gekennzeichnet, dass bei einem Probevolumen von etwa 10-20 µl mit einem Trägergasdurchsatz von 100-300 ml, vorzugsweise etwa 200 ml pro Minute gearbeitet wird.

8.     Verfahren nach Anspruch 4, dadurch gekennzeichnet, dass zur Elimination der sauren Bestandteile mit Natronlauge belegtes Mineralpulver verwendet wird.

9.     Vorrichtung zur Durchführung des Verfahrens nach einem der voranstehenden Ansprüche, gekennzeichnet durch drei in Serie geschaltete beheizte Leitungsabschnitte, von denen der erste einen Reduktionskatalysator, der dritte einen Oxidationskatalysator und der mittlere ein Rückhaltemedium für saure Stoffbestandteile enthält, durch drei Wärmequellen zum Beheizen der Leitungsabschnitte, durch einen Anschluss zur Zufuhr von Wasserstoff und Inertgas und einen Zugang zur Einbringung der Probe in den ersten Leitungsabschnitt, durch einen Anschluss zur Zufuhr von Sauerstoff (oder Luft) in den zweiten Leitungsabschnitt, durch einen an den Ausgang des dritten Leitungsabschnitts angeschlossenen Wasserabscheider und durch einen dem Wasserabscheider nachgeschalteten Stickoxid-Analysator.

10.    Vorrichtung nach Anspruch 9, dadurch gekennzeichnet, dass Mittel zur Durchflusseinstellung für Wasserstoff, Inertgas und Sauerstoff (Druckluft) vorgesehen sind.

11.     Vorrichtung nach Anspruch 9 oder 10, dadurch gekennzeichnet, dass ein Anschluss und Mittel zur Zufuhr eines Testgases in den zweiten Leitungsabschnitt vorgesehen sind.

12.     Vorrichtung nach einem der Ansprüche 9-11, dadurch gekennzeichnet, dass die Wärmequelle für den zweiten Leitungsabschnitt einen zwei- oder mehrteiligen beheizten Metallblock, insbesondere aus Aluminium, umfasst, der den Leitungsabschnitt umschliesst.

13.     Vorrichtung nach einem der Ansprüche 9-12, dadurch gekennzeichnet, dass der Reduktionskatalysator eine Packung von Röllchen umfasst, die aus dünner Nickelfolie aufgewickelt sind und im ersten Leitungsabschnitt achsparallel angeordnet sind.

14.     Vorrichtung nach einem der Ansprüche 9-13, dadurch gekennzeichnet, dass an den Stickoxid-Analysator ein integrierendes, auf Stickstoffgehalt geeichtes Messinstrument angeschlossen ist.

**Fig. 1**

**Fig. 2**

**Fig. 3**

0013661

## EUROPÄISCHER RECHERCHENBERICHT

**Europäisches Patentamt**

Nummer der Anmeldung

EP 80 81 0003

| EINSCHLÄGIGE DOKUMENTE | | | KLASSIFIKATION DER ANMELDUNG (Int.Cl.⁴) |
|---|---|---|---|
| Kategorie | Kennzeichnung des Dokuments mit Angabe, soweit erforderlich, der maßgeblichen Teile | betrifft Anspruch | G 01 N 31/00 |
| | US - A - 3 877 875 (R.H. JONES) <br> * Spalte 9, Zeile 46 bis Spalte 11, Zeile 26; Abbildung 4 * <br><br> -- | 1-3,5, 9 | |
| | US - A - 3 565 583 (J.A. McNULTY) <br> * Spalte 2, Zeile 38 bis Spalte 3, Zeile 70; Abbildungen * <br><br> -- | 1,4,8 | |
| A | US - A - 4 070 155 (F.W. FRAIM) <br> * Das ganze Dokument * <br><br> ---- | 1 | **RECHERCHIERTE SACHGEBIETE (Int. Cl.⁴)** <br><br> G 01 N 31/00 <br> 31/12 <br> 33/18 |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 03-04-1980 | DUCHATELLIER |

EPA form 1503.1 06.78